# EUROPÄISCHE PATENTANMELDUNG

(11) **EP 2 430 917 A2**
(43) Veröffentlichungstag der Anmeldung: **21.03.2012**
(21) Anmeldenummer: 11180848.1
(22) Anmeldetag: 12.09.2011
(51) Int. Cl.: A01K 63/02

(54) **Fass zum Aufbewahren von Wassertieren**

(30) Priorität: 16.09.2010 DE 202010008549 U
(71) Anmelder: Richter, Bodo, 57610 Altenkirchen (DE)
(72) Erfinder: Richter, Günter, 57610 Altenkirchen (DE)
(74) Vertreter: Schaumburg, Thoenes, Thurn, Landskron, Eckert

(57) **Zusammenfassung**

Die Erfindung betrifft ein Fass zum Aufbewahren von Wassertieren. Das Fass enthält einen Aufnahmebereich (24) zur Aufnahme der Wassertiere, der einen Grundkörper (12) bildet, der ein Bodenelement (14) und eine Seitenwand (16) umfasst und der an einer dem Bodenelement (14) entgegensetzten oberen Seite eine Öffnung (22) aufweist. Weiterhin enthält das Fass einen Deckel (28, 42, 62, 74, 82, 82, 104) zum Verschließen des Aufnahmebereichs (24), wobei an der Innenseite (18) der Seitenwand (16) mindestens ein Positionierungselement (20) zum Positionieren des Deckels (28, 42, 62, 74, 82, 82, 104) angeordnet ist, und wobei der Deckel (28, 42, 62, 74, 82, 82, 104) derart ausgebildet ist, dass der Deckel (28, 42, 62, 74, 82, 82, 104) durch die Öffnung (22) zuführbar und durch die Öffnung (22) entnehmbar ist.

## Beschreibung

Die Erfindung betrifft ein Fass zum Aufbewahren von Wassertieren, das einen Grundkörper umfasst, der einen Aufnahmebereich zur Aufnahme der Wassertiere bildet. Der Grundkörper hat ein Bodenelement und eine Seitenwand. Auf der dem Bodenelement entgegengesetzten oberen Seite weist der Grundkörper eine Öffnung auf, durch die die Wassertiere dem Aufnahmebereich zugeführt und aus diesem entnommen werden können.

Üblicherweise werden Wassertiere, beispielsweise Shrimps, in Plastiksäcke abgefüllt. Diese Plastiksäcke werden anschließend in Fässern aufgenommen, deren obere Seite offen ist. Hierbei sind die Plastikbeutel derart dimensioniert, dass die Plastikbeutel und die in ihnen aufgenommenen Wassertiere teilweise über das obere Ende des Fasses überstehen. Zur Handhabung der Fässer werden zwei Fässer zusammen über Zangen, die in die Randbereiche der Fassöffnungen eingreifen, angehoben und transportiert.

Problematisch an der Verwendung solcher Fässer zur Aufbewahrung von Wassertieren ist, dass die Wassertiere durch die Plastikbeutel unzureichend geschützt sind, so dass beispielsweise eine Vergiftung der Wassertiere leicht möglich ist. Ferner ist es problematisch, dass die Fässer aufgrund der aus den Öffnungen überstehenden Plastikbeutel nicht übereinander gestapelt werden können, so dass ein hoher Raumbedarf für die Lagerung der gefüllten Fässer notwendig ist.

Es ist Aufgabe der Erfindung, ein Fass zur Aufbewahrung von Wassertieren anzugeben, das einfach zu handhaben ist und in dem die Wassertiere gut geschützt aufbewahrbar sind.

Diese Aufgabe wird durch ein Fass mit den Merkmalen des Anspruchs 1 gelöst. Vorteilhafte Weiterbildungen der Erfindung sind in den abhängigen Ansprüchen angegeben.

Durch das Vorsehen eines Deckels zum Verschließen des Aufnahmebereiches werden die in dem Aufnahmebereich aufgenommenen Wassertiere geschützt. Insbesondere werden die Wassertiere vor Umwelteinflüssen, wie beispielsweise direkter Sonneneinstrahlung, und/oder vor Manipulationsversuchen, wie beispielsweise Vergiftungen, geschützt. Durch das Vorsehen eines Positionierungselementes an der Innenseite der Seitenwand, durch das der Deckel positioniert wird, wird erreicht, dass der Deckel in dem von den Seitenwänden umgebenen Bereich und somit im Inneren des Fasses angeordnet ist. Der Deckel ist hierzu derart ausgebildet, dass er durch die Öffnung zugeführt und entnommen werden kann. Durch das Anordnen des Deckels innerhalb des Grundkörpers wird erreicht, dass zum Einen zwei Fässer auf einfache Weise stabil übereinander gestapelt werden können und zum anderen eine Handhabung von Fässern mit Hilfe von Zangen, die von oben in die Öffnung des Fasses hineingreifen, möglich ist.

Die Öffnung wird insbesondere durch die dem Bodenelement entgegengesetzte Kante der Seitenwand gebildet, so dass eine möglichst große Öffnung zum Zuführen und/oder Entnehmen der Wassertiere ausgebildet ist.

Die Öffnung hat insbesondere einen kreisförmigen Querschnitt. Der Deckel ist in diesem Fall auch kreisförmig ausgebildet und hat einen Durchmesser, der kleiner ist als der Deckel der Öffnung. Somit kann der Deckel durch die Öffnung zugeführt und entnommen werden. Alternativ können die Öffnung und der Deckel beispielsweise auch eckig, insbesondere rechteckig, ausgebildet sein.

Der Grundkörper ist vorzugsweise rotationssymmetrisch, insbesondere im Wesentlichen zylindrisch ausgebildet. Somit kann der Grundkörper auf einfache Weise gefertigt werden. Der zylindrische Grundkörper kann insbesondere eine oder mehrere Vertiefungen und/der Erhebungen zur Versteifung der Seitenwände aufweisen. Bei einer alternativen Ausführungsform kann der Grundkörper auch nicht rotationssymmetrisch ausgebildet sein. Insbesondere kann der Grundkörper einen nicht kreisförmigen, vorzugsweise rechteckigen, Querschnitt haben.

Der Durchmesser der Öffnung hat vorzugsweise einen Wert zwischen 90 % und 99,9 %, insbesondere zwischen 95 % und 99 %, des maximalen Durchmessers des Grundkörpers. Das Fass ist somit insbesondere als Open-Top-Fass ausgebildet, so dass die Wassertiere auf einfache Weise zugeführt und entnommen werden können und ein möglichst großes Aufnahmevolumen zur Aufnahme der Wassertiere ausgebildet ist.

Der Durchmesser des Deckels hat vorzugsweise einen Wert zwischen 90 % und 99,9 %, insbesondere zwischen 95 % und 99 % des Durchmessers der Öffnung. Somit wird erreicht, dass der Deckel zum einen den Aufnahmebereich sicher und zuverlässig verschließt, zum anderen aber einfach durch die Öffnung zuführbar und entnehmbar ist, so dass eine einfache Handhabung erreicht wird.

Der Durchmesser der Öffnung und der Innendurchmesser des Grundkörpers sind vorzugsweise gleich. Hierdurch werden eine möglichst große Öffnung und ein möglichst großes Aufnahmevolumen erzielt. Bei einer alternativen Ausführungsform der Erfindung kann der Durchmesser der Öffnung auch kleiner sein als der Innendurchmesser des Grundkörpers.

Es ist vorteilhaft, wenn das Positionierungselement und die Seitenwand einteilig ausgebildet sind. Auf diese Weise kann der Grundkörper samt dem Positionierungselement einfach und kostengünstig hergestellt werden und es wird eine hohe Festigkeit erreicht, da keine Fügestellen ausgebildet sind.

Das Positionierungselement umfasst insbesondere ein Auflageelement, auf dem der Deckel zum Verschließen des Aufnahmebereiches aufliegt. In diesem Fall ist das Auflageelement vorzugsweise in Form eines von der Seitenwand aus gesehenen nach innen gerichteten Vorsprungs der Seitenwand ausgebildet, wobei der Innendurchmesser des Vorsprungs insbesondere geringer ist als der Durchmesser des Deckels, so dass der Deckel nicht durch die durch den Vorsprung gebildete Öffnung in den Aufnahmebereich hineinfallen kann.

Zusätzlich oder alternativ kann das Positionierungselement ein Innengewinde und der Deckel ein komplementär hierzu ausgebildetes Außengewinde umfassen. Der Deckel kann somit durch das Außengewinde in das Innengewinde geschraubt und somit fest an dem Grundkörper befestigt werden. Hierdurch wird erreicht, dass der Deckel, im Unterschied zu dem reinen Aufliegen auf einem Auflageelement, auch bei einer Schräglage des Grundkörpers nicht von diesem herunterfällt und/oder verrutscht, so dass ein sicheres Verschließen des Aufnahmebereichs unabhängig von der Lage des Grundkörpers ermöglicht wird.

Bei einer bevorzugten Ausführungsform der Erfindung ist, wenn der Deckel das Positionierungselement kontaktiert, zwischen dem Deckel und der Öffnung des Fasses ein voreingestellter Mindestabstand. Durch diesen Mindestabstand wird es ermöglicht, dass die Fässer auf einfache Weise über Zangen, die in die Öffnung hineinreichen, und die Seitenwand oberhalb des aufgesetzten Deckels kontaktieren gehandhabt werden können. Insbesondere werden zur Handhabung zwei Fässer benachbart zueinander angeordnet, so dass die Zange zeitgleich in die Öffnungen der beiden Fässer hineingreifen kann. Der voreingestellte Mindestabstand hat insbesondere einen Wert zwischen 1 cm und 15 cm, vorzugsweise zwischen 3 cm und 10 cm. Somit wird sichergestellt, dass auch tatsächlich genügend Platz zum sicheren Positionieren der Zange gegeben ist.

Der Deckel umfasst insbesondere eine kreisförmige Platte und einen an dem Rand der Platte angeordneten Ring. Die Platte und der Ring sind insbesondere einteilig ausgebildet. Der Deckel hat somit einen U-förmigen Querschnitt. Der U-förmig ausgebildete Deckel kann sowohl derart auf dem Positionierungselement positioniert werden, dass er mit einer Platte das Positionierungselement kontaktiert, als auch derart, dass er mit der der Platte abgewandten Kante des Ringes das Positionierungselement kontaktiert. Die erste Anordnung hat den Vorteil, dass hierdurch ein breiter Abschluss des Aufnahmebereiches nach oben erreicht wird, so dass Beschädigungen der im Aufnahmebereich aufgenommenen Wassertiere und/oder Verunreinigungen an schwer zugänglichen Stellen des Deckels vermieden werden. Letztere Anordnung hat den Vorteil, dass ein größerer Aufnahmebereich ausgebildet wird, da der durch die U-Form gebildete Hohlraum des Deckels mit zur Aufnahme von Wassertieren benutzt werden kann.

Bei einer alternativen Ausführungsform der Erfindung kann der Deckel mindestens einen Hohlraum umfassen. Hierdurch wird erreicht, dass der Deckel möglichst leicht und somit einfach zu handhaben ist. Bei dem mindestens einen Hohlraum handelt es sich insbesondere um einen geschlossenen Hohlraum, so dass der Deckel in Form eines Hohlkörpers ausgebildet ist. Ein solcher geschlossener Hohlraum ist vor Verschmutzungen geschützt, so dass auch bei der Handhabung von Lebensmitteln eine möglichst hohe Hygiene gegeben ist.

Ferner umfasst der Deckel insbesondere mindestens einen Griff, durch den eine einfache Handhabung des Deckels ermöglicht wird. Der Griff kann sowohl als eine Vertiefung als auch als eine Erhebung auf der Oberseite des Deckels ausgebildet sein, so dass der Deckel auf einfache Weise manuell und/oder maschinell aufgesetzt, abgenommen, aufgeschraubt und/oder abgeschraubt werden kann.

Bei einer bevorzugten Ausführungsform der Erfindung weist die Seitenwand oberhalb des Aufnahmebereichs mindestens eine Bohrung auf. Auch der Deckel hat mindestens eine seitliche Bohrung, wobei die Bohrungen derart ausgebildet sind, dass, wenn der Deckel das Positionierungselement kontaktiert, die Bohrung koaxial zueinander ausrichtbar sind. Über die Bohrungen kann der Deckel mit dem Grundkörper auf einfache Weise verplombt werden, so dass ein unautorisiertes Öffnen des Aufnahmebereiches auf einfache Weise festgestellt werden kann. Es ist besonders vorteilhaft, wenn die Seitenwand und der Deckel jeweils mindestens zwei an entgegengesetzten Seiten angeordnete Bohrungen aufweisen, so dass auch ein Aufklappen des Deckels zuverlässig vermieden wird.

Ferner kann die mindestens eine Bohrung der Seitenwand und/oder die mindestens eine Bohrung des Deckels auch ein Innengewinde umfassen, so dass von außen eine Schraube in die beiden Bohrungen einführbar ist und somit der Deckel sicher befestigt werden kann. Hierdurch wird erreicht, dass auch bei einer Schieflage des Fasses der Deckel nicht von dem Aufnahmebereich herunterfallen bzw. herunterrutschen kann.

Alternativ kann der Deckel auch hohlkegelstumpfförmig ausgebildet sein. In diesem Fall ist insbesondere auch die Innenfläche der Seitenwand an derjenigen Stelle, an der der Deckel an sie angrenzt, wenn er das Positionierungselement kontaktiert, entsprechend komplementär zum Deckel schräg abgeflacht, so dass der Deckel möglichst bündig an der Innenfläche der Seitenwand anliegt und über die möglichst große Kontaktfläche zwischen dem Deckel und der Seitenwand ein sicheres Verschließen des Aufnahmebereiches erreicht wird.

Das Bodenelement hat vorzugsweise eine umlaufende Aussparung, wobei das Bodenelement im Bereich der Aussparung einen Durchmesser hat, der kleiner ist als der Durchmesser der Öffnung. Auf diese Weise wird erreicht, dass zwei Fässer auf einfache Weise aufeinander gestapelt werden können, wobei der Bereich des Bodenelementes, der einen kleineren Durchmesser als die Öffnung hat, innerhalb der Öffnung des untenstehenden Fasses angeordnet ist, so dass ein seitliches Verrutschen der Fässer relativ zueinander vermieden wird.

Der Grundkörper und der Deckel sind bei einer bevorzugten Ausführungsform der Erfindung aus einem Kunststoff, insbesondere aus Polyethylen, gefertigt. Auf diese Weise werden ein geringes Gewicht und eine hohe Haltbarkeit des Fasses erreicht.

Weitere Merkmale und Vorteile der Erfindung ergeben sich aus der folgenden Beschreibung, die die Erfindung anhand von Ausführungsbeispielen im Zusammenhang mit den beigefügten Figuren näher erläutert.

Es zeigen:
- Figur 1: eine schematische Schnittdarstellung eines Fasses zur Aufbewahrung von Wassertieren gemäß einer ersten Ausführungsform;
- Figur 2: eine schematische Schnittdarstellung eines Ausschnitts eines Fasses gemäß einer zweiten Ausführungsform;
- Figur 3: eine schematische Schnittdarstellung eines Ausschnitts eines Fasses gemäß einer dritten Ausführungsform;
- Figur 4: eine schematische Schnittdarstellung eines Ausschnitts eines Fasses gemäß einer vierten Ausführungsform;

- Figur 5: eine schematische Schnittdarstellung eines Ausschnitts eines Fasses gemäß einer fünften Ausführungsform;
- Figur 6: eine schematische Schnittdarstellung eines Ausschnitts eines Fasses gemäß einer sechsten Ausführungsform; und
- Figur 7: eine schematische Darstellung eines Ausschnitts zweier übereinander gestapelter Fässer gemäß einer siebten Ausführungsform.

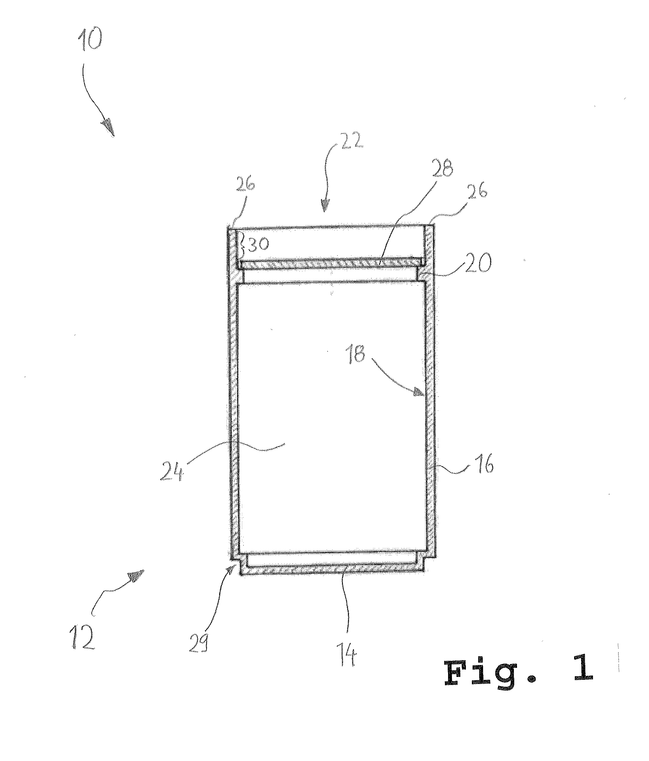

In Figur 1 ist eine schematische Schnittdarstellung eines Fasses 10 zur Aufbewahrung von Wassertieren gemäß einer ersten Ausführungsform der Erfindung gezeigt. Das Fass 10 umfasst einen Grundkörper 12, der ein Bodenelement 14 und eine Seitenwand 16 hat. An einer Innenfläche der Seitenwand 16 ist ein Positionierungselement 20 angeordnet, das einteilig mit der Seitenwand 16 ausgebildet ist. Der gesamte Grundkörper 12, also das Bodenelement 14, die Seitenwand 16 und das Positionierungselement 20 sind insbesondere einteilig ausgebildet, so dass eine einfache Herstellung möglich ist. Der Grundkörper 12 ist insbesondere aus Polyethylen hergestellt, so dass er zum einen widerstandsfähig und zum anderen sehr leicht ist. Der Grundkörper 12 wird insbesondere über ein Blasformungsverfahren, ein Spritzgussverfahren und/oder Rotationsformverfahren hergestellt.

Der Grundkörper 12 weist an der dem Bodenelement 14 entgegengesetzten oberen Seite eine Öffnung 22 auf, durch die die Wassertiere zugeführt und entnommen werden können. Die Öffnung 22 ist hierbei insbesondere durch die obere Kante 26 der Seitenwand 16 ausgebildet, so dass eine möglichst große Öffnung 22 erreicht wird und die Wassertiere auf einfache Weise einem Aufnahmebereich 24 zugeführt und/oder entnommen aus diesem werden können. Der Aufnahmebereich 24 ist durch das Bodenelement 14, die Seitenwand 16 und das Positionierungselement 20 begrenzt.

Ferner umfasst das Fass 10 einen Deckel 28, der auf das Positionierungselement 20 aufgesetzt und von dem Positionierungselement 20 abgenommen werden kann. In Figur 1 ist der Deckel 28 auf das Positionierungselement 20 aufgesetzt, so dass der Aufnahmebereich 24 durch den Deckel 28 verschlossen wird. In dem aufgesetzten Zustand liegt der Deckel 28 auf dem als Auflageelement ausgebildeten Positionierungselement 20 auf.

Der Deckel 28 wird durch die Öffnung 22 auf das Auflageelement 20 aufgelegt und ebenfalls durch die Öffnung 22 von dem Auflageelement 20 abgenommen. Der Deckel 28 ist somit, wenn er auf dem Auflageelement 20 aufliegt, innerhalb des durch die Seitenwand 16 begrenzten Raumes des Grundkörpers 12 angeordnet. Der Deckel 28 ist bei der in Figur 1 gezeigten Ausführungsform als eine kreisförmige Platte ausgebildet, so dass er einfach und kostengünstig herzustellen ist. Durch die Anordnung des Deckels 28 innerhalb des von der Seitenwand 16 begrenzten Bereiches wird erreicht, dass überhalb des Deckels 28, also an der dem Aufnahmebereich 24 abgewandten Seite des Deckels 28, ein Überstandsbereich 30 der Seitenwand 16 ausgebildet ist, über den das Fass 10 auf einfache Weise gehandhabt werden kann. Insbesondere wird durch diesen Überstandsbereich 30 erreicht, dass das Fass zusammen mit einem weiteren Fass über eine Zange, die an die Innenseite 18 im Bereich des Überstandsbereiches 30 eingreift, gehandhabt werden kann.

Durch den Deckel 28 wird ein Schutz der in dem Aufnahmebereich 24 aufgenommenen Wassertiere erreicht. Insbesondere werden somit ein Zugriff auf die Wassertiere verhindert und die hygienischen Verhältnisse verbessert.

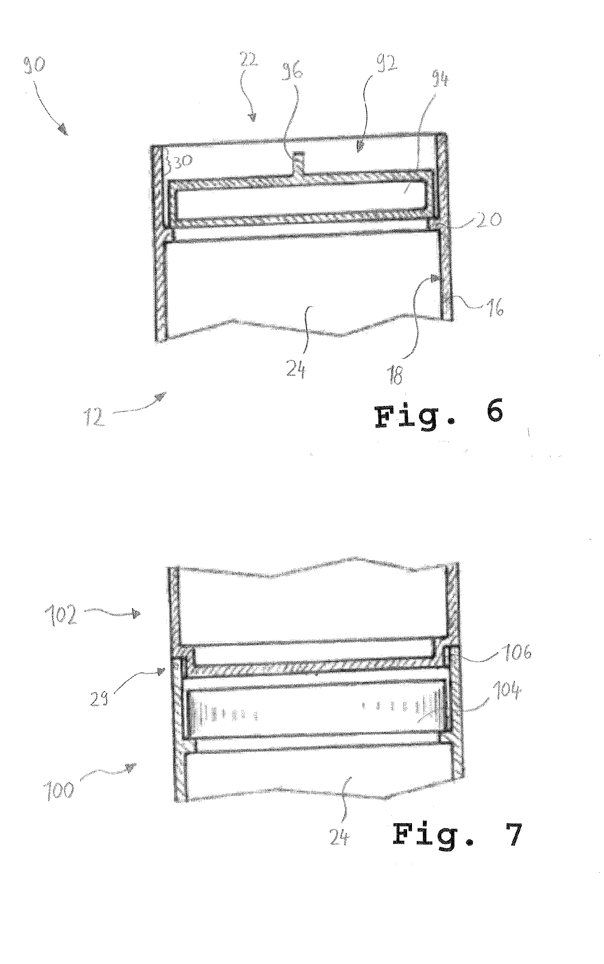

Das Bodenelement 14 umfasst an seinem Randbereich eine umlaufende Aussparung 29, wobei der Durchmesser des Bodenelements 14 im Bereich der Aussparung 29 geringer ist als der Innendurchmesser der Seitenwand 16 im Bereich der Öffnung 22. Somit können zwei entsprechend des ersten Ausführungsbeispiels nach Figur 1 ausgebildete Fässer, wie später in Zusammenhang mit Figur 7 noch näher beschrieben, auf einfache Weise sicher übereinander gestapelt werden, so dass eine platzsparende Lagerung möglich ist.

Damit der Deckel 28 durch die Öffnung 22 auf das Auflageelement 20 aufgelegt werden kann, hat er einen kleineren Durchmesser als die Öffnung 22. Der Innendurchmesser des Grundkörpers 12 ist im Bereich des Auflageelementes 20 geringer als der Durchmesser des Deckels 28, so dass der Deckel 28 nicht in den Aufnahmebereich 24 fallen kann.

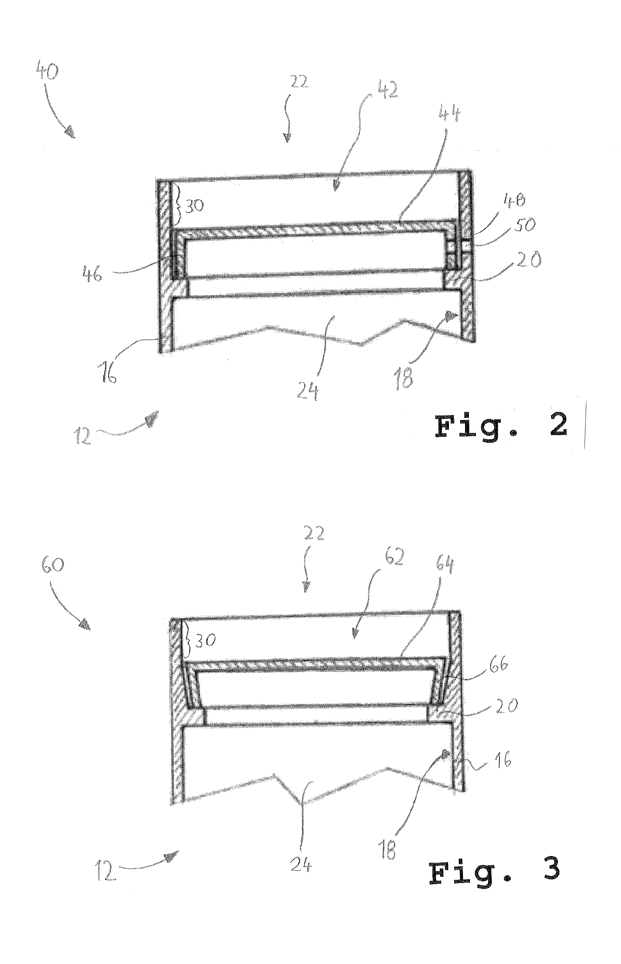

In Figur 2 ist eine schematische Schnittdarstellung eines Ausschnitts eines Fasses 40 gemäß einer zweiten Ausführungsform gezeigt. Bei dieser zweiten Ausführungsform umfasst der Deckel 42 eine Grundplatte 44 und einen umlaufend an dem Rand der Grundplatte 44 angeordneten Ring 46. Somit ergibt sich insgesamt ein U-förmiger Querschnitt des Deckels 42. Die Grundplatte 44 und der Ring 46 sind insbesondere einteilig ausgebildet.

Der Deckel 42 wird, wie in Figur 2 gezeigt, derart aufgesetzt, dass er mit dem der Grundplatte 44 entfernten Rand des Ringes 46 das Auflageelement 20 kontaktiert. Durch diese hohlförmige Ausbildung des Deckels 42 wird erreicht, dass der Aufnahmebereich 24 zur Aufnahme der Wassertiere vergrößert wird.

Sowohl die Seitenwand 16 des Grundkörpers 12 als auch der Deckel 42 weisen jeweils eine Bohrung 48, 50 auf, wobei der Deckel 42 derart auf dem Auflageelement 20 platzierbar ist, dass die beiden Bohrungen 48, 50 koaxial angeordnet sind. Über die beiden Bohrungen 48, 50 kann das Fass 40 auf einfache Weise verplombt werden, so dass ein unautorisiertes Öffnen des Deckels 42 ermittelt werden kann. Bei einer alternativen Ausführungsform der Erfindung können der Deckel 42 und der Grundkörper 12 auch jeweils mehr als eine Bohrung 48, 50 umfassen, so dass der Deckel 42 an mehreren Stellen verplombt werden kann. Bei einer weiteren alternativen Ausführungsform der Erfindung können die Bohrungen 48, 50 auch Innengewinde umfassen, so dass der Deckel 42 über eine Schraube auf einfache Weise an dem Grundkörper 12 befestigbar ist. Hierdurch wird vermieden, dass der Deckel 42, beispielsweise bei einer Schräglage des Fasses 40, unbeabsichtigt verrutscht und der Aufnahmebereich 24 somit geöffnet wird.

In Figur 3 ist eine schematische Schnittdarstellung eines Ausschnitts eines Fasses 60 gemäß einer dritten Ausführungsform der Erfindung gezeigt. Bei dieser dritten Ausführungsform umfasst der Deckel 62, wie bei der zweiten Ausführungsform, eine kreisförmige Grundplatte 64 und einen Ring 66, wobei der Ring 66 bei dieser dritten Ausführungsform derart ausgebildet ist, dass seine Seitenwände aufeinander zulaufend angeordnet sind. Somit ist der Deckel 62 insgesamt hohlkegelstumpfförmig ausgebildet. Entsprechend ist auch die Seitenwand 16 in dem Bereich, in dem der Deckel 62 sie kontaktiert, wenn er auf dem Auflageelement 20 aufgesetzt ist, entsprechend an ihrer Innenseite 18 abgeflacht ausgebildet, so dass die Außenfläche des Ringes 66 bündig an der Innenfläche 18 des Grundkörpers 12 anliegt. Somit wird ein Verrutschen des Deckels 62, insbesondere bei einer Schieflage des Fasses 60, vermieden.

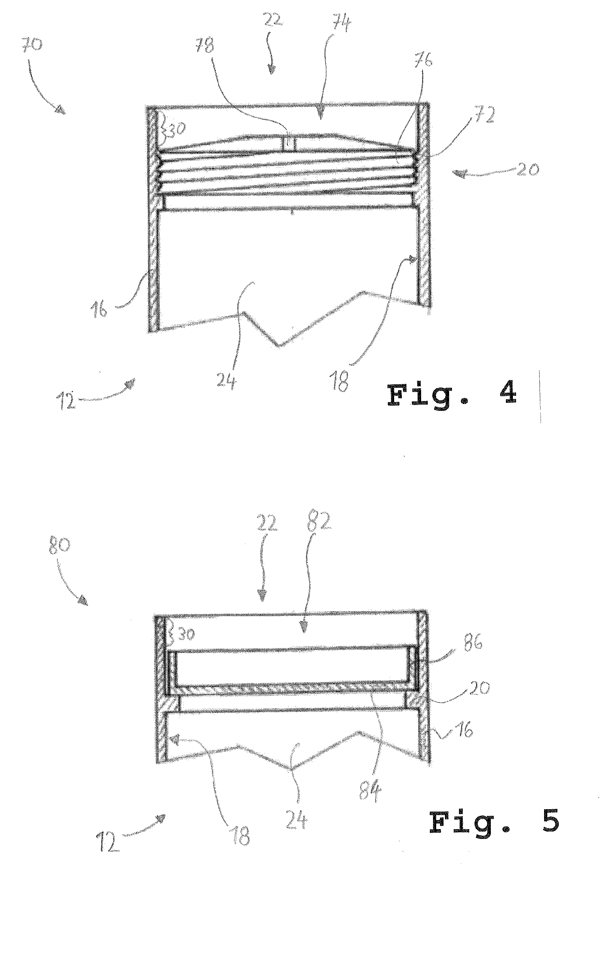

In Figur 4 ist eine schematische Schnittdarstellung eines Ausschnitts eines Fasses 70 gemäß einer vierten Ausführungsform der Erfindung gezeigt. Bei dieser Ausführungsform umfasst das Positionierungselement 20 ein Innengewinde 72 und der Deckel 74 ein komplementär hierzu ausgebildetes Außengewinde 76. In diesem Fall liegt der Deckel 74 nicht nur auf dem Auflageelement 20 auf, sondern wird aufgeschraubt, so dass er in der aufgeschraubten Position gehalten wird, unabhängig davon, in welcher Lage das Fass 70 angeordnet ist. Ferner hat ein solcher aufschraubbarer Deckel 74 den Vorteil, dass durch ihn der Aufnahmebereich 74 dicht verschlossen wird, so dass keine Feuchtigkeit bei einer Schieflage des Fasses 70 keine Flüssigkeit auslaufen kann.

Der Deckel 74 umfasst eine Aussparung 78, über die der Deckel 74 auf einfache Weise auf- und abgeschraubt werden kann. Bei einer alternativen Ausführungsform der Erfindung kann der Deckel 74 anstatt einer Aussparung auch einen auf dem Deckel 74 montierten Griff umfassen.

In Figur 5 ist eine schematische Schnittdarstellung eines Ausschnitts eines Fasses 80 gemäß einer fünften Ausführungsform der Erfindung gezeigt. Bei dieser fünften Ausführungsform ist der Deckel 82, ähnlich des Deckels 42 gemäß der zweiten Ausführungsform nach Figur 2, derart ausgebildet, dass er eine Grundplatte 84 und einen zylindrischen Ring 86 umfasst. Im Unterschied zu der zweiten Ausführungsform hat der Deckel 82 keine Bohrung 48 und wird derart aufgesetzt, dass die Grundplatte 84 das Auflageelement 20 kontaktiert. Durch diesen glatten Abschluss des Deckels 82 in Richtung des Aufnahmebereiches 24 wird erreicht, dass das Ablagern von Verschmutzungen vermieden wird und somit eine höhere Hygiene bei der Handhabung von Lebensmitteln gewährleistet ist. Bei einer alternativen Ausführungsform kann der Deckel 82, ähnlich des Deckels 42 gemäß der zweiten Ausführungsform nach Figur 2, mindestens eine Bohrung 48 aufweisen. In diesem Fall weist auch die Seitenwand 16 eine Bohrung 50 auf, so dass der Deckel 82 und der Grundkörper 12 verplombt und/oder miteinander verschraubt werden können.

In Figur 6 ist eine schematische Schnittdarstellung eines Ausschnitts eines Fasses 90 gemäß einer sechsten Ausführungsform der Erfindung gezeigt. Der Deckel 92 ist als ein Hohlkörper ausgebildet, der einen vollständig umschlossenen Hohlraum 94 umfasst. Auf diese Weise wird das Gewicht des Deckels 94 reduziert, so dass der Deckel 92 leichter zu handhaben ist. Ferner umfasst der Deckel 92 einen als Erhebung ausgebildeten Griff 96, über den er auf einfache Weise abgenommen und aufgesetzt werden kann.

In Figur 7 ist eine schematische Schnittdarstellung eines Ausschnitts zweier aufeinander gestapelter Fässer 100 und 102 dargestellt. Das untere Fass 100 umfasst einen Deckel 104, der den Aufnahmebereich 24 des unteren Fasses verschließt.

Das obere Fass 102 ist derart auf das untere Fass 100 aufgesetzt, dass sein Bodenelement 14 teilweise in den durch die Seitenwände 16 des unteren Fasses 100 begrenzten Bereiches hineinragt und der untere Teil des Bodenelements 14 innerhalb der Öffnung 22 des unteren Fasses 100 angeordnet ist. Durch den Eingriff der seitliche Flanke 106 der Aussparung 29 in die Öffnung 22 wird ein Verrutschen des oberen Fasses 102 relativ zum unteren Fass 100 vermieden, so dass ein Herunterfallen des Fasses 102 verhindert wird.

### Bezugszeichenliste

- 10, 40, 60, 70, 80, 90, 100, 102: Fass
- 12: Grundkörper
- 14: Bodenelement
- 16: Seitenwand
- 18: Innenfläche
- 20: Positionierungselement
- 22: Öffnung
- 24: Aufnahmebereich
- 26: Kante
- 28, 42, 62, 74, 82, 92, 104: Deckel
- 29: Aussparung
- 30: Überstandsbereich
- 44, 64, 84: Grundplatte
- 46, 66, 86: Ring
- 48, 50: Bohrung
- 72,76: Gewinde
- 78: Aussparung
- 94: Hohlraum
- 96: Griff
- 106: Flanke

## Patentansprüche

1. Fass zum Aufbewahren von Wassertieren,
mit einem einen Aufnahmebereich (24) zur Aufnahme der Wassertiere bildenden Grundkörper (12), der ein Bodenelement (14) und eine Seitenwand (16) umfasst und der an einer dem Bodenelement (14) entgegensetzten oberen Seite eine Öffnung (22) aufweist, und mit einem Deckel (28, 42, 62, 74, 82, 82, 104) zum Verschließen des Aufnahmebereichs (24),
wobei an der Innenseite (18) der Seitenwand (16) mindestens ein Positionierungselement (20) zum Positionieren des Deckels (28, 42, 62, 74, 82, 82, 104) angeordnet ist, und
wobei der Deckel (28, 42, 62, 74, 82, 82, 104) derart ausgebildet ist, dass der Deckel (28, 42, 62, 74, 82, 82, 104) durch die Öffnung (22) zuführbar und durch die Öffnung (22) entnehmbar ist.

2. Fass (10, 40, 60, 70, 80, 90, 100, 102) nach Anspruch 1, **dadurch gekennzeichnet, dass** die Öffnung (22) kreisförmig ist, und dass der Durchmesser des Deckels (28, 42, 62, 74, 82, 82, 104) kleiner ist als der Durchmesser der Öffnung.

3. Fass (10, 40, 60, 70, 80, 90, 100, 102) nach einem der vorhergehenden Ansprüche, **dadurch gekennzeichnet, dass** der Grundkörper (12) rotationssymmetrisch, insbesondere im Wesentlichen zylindrisch, ausgebildet ist.

4. Fass (10, 40, 60, 70, 80, 90, 100, 102) nach einem der Ansprüche 2 oder 3, **dadurch gekennzeichnet, dass** der Durchmesser der Öffnung (22) einen Wert zwischen 90% und 99,9% des maximalen Durchmessers des Grundkörpers (12), insbesondere zwischen 95% und 99% des maximalen Durchmessers des Grundkörpers (12), hat.

5. Fass (10, 40, 60, 70, 80, 90, 100, 102) nach einem der Ansprüche 2 bis 4, **dadurch gekennzeichnet, dass** der Durchmesser des Deckels (28, 42, 62, 74, 82, 82, 104) einen Wert zwischen 90% und 99,9% des Durchmessers der Öffnung (22), insbesondere zwischen 95% und 99% des Durchmessers der Öffnung (22), hat.

6. Fass (10, 40, 60, 70, 80, 90, 100, 102) nach einem der Ansprüche 2 bis 5, **dadurch gekennzeichnet, dass** der Durchmesser der Öffnung (22) und der Innendurchmesser des Grundkörpers (12) gleich groß sind.

7. Fass (10, 40, 60, 70, 80, 90, 100, 102) nach einem der vorhergehenden Ansprüche, **dadurch gekennzeichnet, dass** das Positionierungselement (20) und die Seitenwand (16) einteilig ausgebildet sind.

8. Fass (10, 40, 60, 70, 80, 90, 100, 102) nach einem der vorhergehenden Ansprüche, **dadurch gekennzeichnet, dass** das Positionierungselement (20) ein Auflageelement umfasst, auf dem der Deckel (28, 42, 62, 74, 82, 82, 104) zum Verschließen des Aufnahmebereiches (24) aufliegt.

9. Fass (10, 40, 60, 70, 80, 90, 100, 102) nach Anspruch 8, **dadurch gekennzeichnet, dass** das Auflageelement (20) als ein nach innen gerichteter Vorsprung der Innenseite (18) ausgebildet ist, wobei der Innendurchmesser des Vorsprungs (20) vorzugsweise geringer ist als der Durchmesser des Deckels (28, 42, 62, 74, 82, 82, 104).

10. Fass (70) nach einem Ansprüche 2 bis 9, **dadurch gekennzeichnet, dass** das Positionierungselement (20) ein Innengewinde (72) und der Deckel (74) ein komplementär zum Innengewinde (72) ausgebildetes Außengewinde (76) umfasst, und dass der Deckel (74) über eine zwischen dem Innengewinde (72) und dem Außengewinde (76) ausbildbare Schraubverbindung an dem Grundkörper (12) befestigbar ist.

11. Fass (10, 40, 60, 70, 80, 90, 100, 102) nach einem der vorhergehenden Ansprüche, **dadurch gekennzeichnet, dass** der Deckel (28, 42, 62, 74, 82, 82, 104), wenn er das Positionierungselement (20) kontaktiert, in einem von der Seitenwand (16) des Grundkörpers (12) umgebenen Bereich angeordnet ist.

12. Fass (10, 40, 60, 70, 80, 90, 100, 102) nach einem der vorhergehenden Ansprüche, **dadurch gekennzeichnet, dass**, wenn der Deckel (28, 42, 62, 74, 82, 82, 104) das Positionierungselement (20) kontaktiert, zwischen dem Deckel (28, 42, 62, 74, 82, 82, 104) und der Öffnung (22) ein voreingestellter Mindestabstand (30), insbesondere ein Abstand zwischen 1cm und 15 cm, vorzugsweise zwischen 3 cm und 10 cm, ist.

13. Fass (40, 80) nach einem der vorhergehenden Ansprüche, **dadurch gekennzeichnet, dass** der Deckel (42, 82) eine kreisförmige Platte (44, 84) und einen an dem Rand der Platte (44, 84) angeordneten Ring (46, 86) umfasst.

14. Fass (80) nach Anspruch 13, **dadurch gekennzeichnet, dass** zum Verschließen des Aufnahmebereichs (24) die Platte (84) des Deckels (82) das Positionierungselement (20) kontaktiert.

15. Fass (40) nach Anspruch 13, **dadurch gekennzeichnet, dass** der Deckel (42) zum Verschließen des Aufnahmebereichs (24) das Positionierungselement (20) mit der der Platte (44) abgewandten Kante des Rings (46) kontaktiert.

16. Fass (90) nach einem der vorhergehenden Ansprüche, **dadurch gekennzeichnet, dass** der Deckel (92) mindestens einen Hohlraum (94), insbesondere mindestens einen geschlossenen Hohlraum (94), umfasst.

17. Fass (70, 90) nach einem der vorhergehenden Ansprüche, **dadurch gekennzeichnet, dass** der Deckel (74, 92) mindestens einen Griff (78, 96) umfasst.

18. Fass (70, 90) nach Anspruch 17, **dadurch gekennzeichnet, dass** der Griff (78, 96) als Vertiefung oder Erhebung ausgebildet ist.

19. Fass (40) nach einem der vorhergehenden Ansprüche, **dadurch gekennzeichnet, dass** in der Seitenwand (16) oberhalb des Aufnahmebereichs (24) mindestens eine Bohrung (50) vorgesehen ist, der Deckel (42) mindestens eine seitliche Bohrung (48) aufweist, und dass die Bohrung (80) der Seitenwand (16) und die Bohrung (48) des Deckels (42) koaxial anordenbar sind, wenn der Deckel (42) das Positionierungselement (20) kontaktiert.

20. Fass (60) nach einem der vorhergehenden Ansprüche, **dadurch gekennzeichnet, dass** der Deckel (62) hohlkegelstumpfförmig ausgebildet ist.

21. Fass (10, 40, 60, 70, 80, 90, 100, 102) nach einem der vorhergehenden Ansprüche, **dadurch gekennzeichnet, dass** die Innenfläche (18) der Seitenwand (16) von dem Positionierungselement (20) aus in Richtung der Öffnung (22) gesehen komplementär zum Randbereich des Deckels (28, 42, 62, 74, 82, 82, 104) ausgebildet ist.

22. Fass (10, 40, 60, 70, 80, 90, 100, 102) nach einem der vorhergehenden Ansprüche, **dadurch gekennzeichnet, dass** das Bodenelement (14) eine umlaufenden Aussparung (29) aufweist.

23. Fass (10, 40, 60, 70, 80, 90, 100, 102) nach Anspruch 22, **dadurch gekennzeichnet, dass** das Bodenelement (14) im Bereich der Aussparung (29) komplementär zur Öffnung (22) ausgebildet ist.

24. Fass (10, 40, 60, 70, 80, 90, 100, 102) nach einem der vorhergehenden Ansprüche, **dadurch gekennzeichnet, dass** der Grundkörper (12) und/oder der Deckel (28, 42, 62, 74, 82, 82, 104) aus einem Kunststoff, insbesondere Polyethylen, gefertigt sind.
